# EUROPÄISCHE PATENTSCHRIFT

(11) **EP 3 832 038 B1**
(45) Veröffentlichungstag und Bekanntmachung des Hinweises auf die Patenterteilung: **29.10.2025**
(21) Anmeldenummer: 20208517.1
(22) Anmeldetag: 19.11.2020
(51) Int. Cl.: E03D 1/14, E03D 1/36, E03D 9/08, G01F 23/00

(54) **SYSTEM ZUR WASSERVERSORGUNG EINES SANITÄRGEGENSTANDES MIT EINER SOLCHEN VORRICHTUNG**
SYSTEM FOR SUPPLYING WATER TO A SANITARY ARTICLE WITH SUCH A DEVICE
SYSTÈME D'ALIMENTATION EN EAU D'UN OBJET SANITAIRE DOTÉ D'UN TEL DISPOSITIF

(30) Priorität: 04.12.2019 DE 102019133021
(43) Veröffentlichungstag der Anmeldung: 09.06.2021
(73) Patentinhaber: Viega Technology GmbH & Co. KG, 57439 Attendorn (DE)
(72) Erfinder: Rothstein, Gerhard, 42553 Velbert (DE)
(74) Vertreter: Cohausz & Florack

(56) Entgegenhaltungen:
- WO-A1-2019/239370
- WO-A2-2018/208259
- AT-A4- 506 792
- AT-U1- 4 952
- DE-A1- 10 109 152
- DE-U1- 202007 017 789
- DE-U1- 202011 105 696
- US-A1- 2018 299 316
- US-A1- 2018 364 743

## Beschreibung

Die Erfindung betrifft ein System zur Wasserversorgung eines Sanitärgegenstandes, mit einer Vorrichtung zum Spülen eines sanitären WC- oder Urinalbeckens, mit einem Spülkasten zur Aufnahme von Wasser, der einen Zulauf und einen Ablauf aufweist, mit einer Steuerung, und mit mindestens einer Messvorrichtung zur Messung eines Füllstands im Spülkasten, wobei die Messvorrichtung als elektrische Messvorrichtung ausgeführt ist.

Spülkästen für WC- oder Urinalbecken sind in verschiedensten Ausführungen bekannt. Herkömmliche WC-Spülkästen weisen ein mechanisch betätigbares Ablaufventil und ein schwimmergesteuertes Füllventil auf.

Des Weiteren sind auch Spülkästen für WC- oder Urinalbecken bekannt, die ein elektrisch betätigbares Ablaufventil sowie ein elektrisch gesteuertes Füllventil aufweisen. So offenbart beispielsweise die DE 20 2007 017 789 U1 einen Unterputzspülkasten für ein WC- oder Urinalbecken, mit einem Kastenkörper zur Aufnahme von Spülwasser, einem Füllventil, einem Ablaufventil, einem Spülrohr und einer elektrischen Betätigungsvorrichtung zur Auslösung einer Spülung. Unterhalb des Kastenkörpers ist ein Anschlussraum oder Gehäuse zur Aufnahme einer elektrischen Steuerung und eines absperrbaren Wasseranschlusses angeordnet, wobei der Anschlussraum oder das Gehäuse an seiner Vorderseite eine Revisionsöffnung aufweist, die so bemessen und angeordnet ist, dass sie nach der Montage des WC- oder Urinalbeckens durch letzteres verdeckt ist. Die Betätigung des Füllventils sowie des Ablaufventils durch die Steuerung erfolgt wasserstandabhängig. Hierzu sind in dem Kastenkörper oder in dessen Wandung zwei Wasserstandsensoren angeordnet, die voneinander vertikal beabstandet sind. Der obere Sensor definiert die gewünschte maximale Füllhöhe, wohingegen der untere Sensor eine Kleinspülmenge definiert, nach deren Abfluss in das WC-Becken das Ablaufventil geschlossen wird. Die Wasserstandsensoren können dabei als kapazitive Sensoren ausgebildet sein. Die beiden Wasserstandsensoren erfassen den Füllstand des Spülkastens im Wesentlichen nur punktweise.

Die DE 101 09 152 A offenbart eine Vorrichtung zur Regelung des Füllstandes in Behältern für Flüssigkeiten, insbesondere Batterien oder Wasserkästen von Toiletten, umfassend wenigstens eine an den Behälter angeschlossene Flüssigkeitsleitung mit einem Füllventil, dem ein Pegelsensor mit einer Einrichtung zur Betätigung des Füllventils zugeordnet ist, wobei der Pegelsensor über eine Signalleitung mit der Betätigungseinrichtung des Füllventils verbunden ist, und wobei dem Pegelsensor eine elektrische Steuereinheit nachgeschaltet ist. Der Pegelsensor kann als kapazitiver Sensor ausgeführt sein. Er misst ständig die Höhe der Flüssigkeit im Behälter und gibt dann, wenn eine vorgeschriebene Mindesthöhe unterschritten wird, ein elektrisches Signal an eine elektronische Steuereinheit ab. Das Signal wird von der Steuereinheit über eine Signalleitung an eine elektromagnetische Betätigungseinrichtung weitergegeben, mit der Folge, dass das Füllventil geöffnet wird.

Die AT 004 952 U offenbart einen Spülkasten für eine Klosettanlage, umfassend einen Kastenkörper zum Speichern von Spülwasser, ein Füllventil zum Füllen des Spülkastens mit Spülwasser, ein Ablaufventil, eine Betätigungsvorrichtung zur Auslösung einer Spülung, eine Steuervorrichtung zur Steuerung des Spül- und Füllvorganges und Mittel zur elektronischen Erfassung des Füllzustandes des Kastenkörpers. Die Mittel zur elektronischen Erfassung des Füllzustandes sind dabei so ausgebildet, dass sie den Füllzustand während des Spülvorganges und des Füllvorgangs stufenlos erfassen.

Die AT 506 792 A offenbart einen WC-Spülkasten zur Aufnahme und Speicherung von Spülwasser, mit einem Einlassventil, einer Auslösevorrichtung mit einem Ventilverschluss zur Abgabe von Spülwasser in eine WC-Schüssel, einer Betätigungsvorrichtung, einer elektronischen Schaltungseinheit zur Steuerung des Spülvorgangs und der Füllhöhe des Spülkastens und mit mindestens einem elektronischen Messwertgeber zur Erfassung von Messwerten der Füllhöhe.

Die US 2018/0364743 A offenbart ein Überwachungssystem zur Überwachung eines Wasserstands in einem sanitären Installationselement. Das System umfasst eine Sensoreinheit, die mindestens einen Sensor zur kontinuierlichen Erfassung des Füllstands eines Behälters umfasst, wobei der Behälter einen Bodenauslass mit einem Ablaufventil aufweist, und wobei eine Steuerung zur Betätigung des Ablaufventils vorhanden ist. Bei dem Installationselement kann es sich insbesondere um eine Toilette oder ein Bidet handeln.

Die US 2018/0299316 A zeigt eine Toilettenvorrichtung, mit einer Toilette, einem Wassertank, einem am Ablauf des Wassertanks angeordneten Ablaufventil, einem Füllstandsensor und einer Steuerung, wobei die Steuerung zur Betätigung des Ablaufventils vorgesehen ist. Der Füllstandsensor ist als kapazitiver Sensor ausgeführt, der sich über einen großen vertikalen Abschnitt des Wassertanks erstreckt und für eine kontinuierliche Erfassung des Füllstands geeignet scheint.

Die WO 2018/208 259 A offenbart ein System zum Spülen einer Toilettenschüssel, mit einem Spülkasten, einem Zu- und Ablauf, einer Steuerung und einem Füllstandsensor. Der Füllstand des Spülkastens kann in einem vorgegebenen Zeitraum kontinuierlich bestimmt werden.

Davon ausgehend liegt der Erfindung die Aufgabe zugrunde, ein System der eingangs genannten Art bereitzustellen, mit der sich Spül- und/oder Füllvorgänge verbessern lassen.

Diese Aufgabe wird durch ein System zur Wasserversorgung mit den in Anspruch 1 angegebenen Merkmalen gelöst. Bevorzugte und vorteilhafte Ausgestaltungen des erfindungsgemäßen Systems sind in den Unteransprüchen angegeben.

Das erfindungsgemäße System zur Wasserversorgung umfasst: eine Vorrichtung zum Spülen eines sanitären Beckens, insbesondere WC- oder Urinalbeckens, einen Spülkasten zur Aufnahme von Wasser, der einen Zulauf und einen Ablauf aufweist, ein Füllventil und eine Ablaufventil, eine Betätigungseinrichtung zum Betätigen des Ablaufventils, eine als elektrische Messvorrichtung ausgeführte Messvorrichtung zur Messung eines Füllstands im Spülkasten, wobei die Messvorrichtung für eine zeitlich und räumlich kontinuierliche Erfassung des Füllstands und/oder für eine zeitlich und räumlich diskontinuierliche Erfassung des Füllstands und/oder für eine zeitlich kontinuierliche und räumlich diskontinuierliche Erfassung des Füllstands und/oder für eine zeitlich diskontinuierliche und räumlich kontinuierliche Erfassung des Füllstands hergerichtet ist und wobei die Messvorrichtung, falls sie für eine räumlich diskontinuierliche Erfassung des Füllstands hergerichtet ist, mehr als zwei, bevorzugt mehr als drei Sensorelemente für eine Erfassung des Füllstands aufweist, und eine Steuerung, die zur Betätigung und/oder Regelung des Füllventils und des Ablaufventils hergerichtet ist, wobei das Ablaufventil derart steuerbar ist, dass es einen variablen Spülwasservolumenstrom zulässt.

Die Erfindung basiert auf der Überlegung, dass für eine Optimierung des Spül- und/oder Füllvorgangs eine Erfassung des Füllstands, insbesondere eine zeitlich und räumlich kontinuierliche, eine zeitlich und räumlich diskontinuierliche, eine zeitlich kontinuierliche und räumlich diskontinuierliche und/oder für eine zeitlich diskontinuierliche und räumlich kontinuierliche vorteilhaft wäre, beispielsweise um einen Spülwasservolumenstrom in Abhängigkeit des momentanen Füllstands anzupassen. Herkömmliche Vorrichtungen zur Messung des Füllstandes eines Spülkastens sowie die aus der DE 20 2007 017 789 U1 bekannte Vorrichtung verwenden die Füllstandinformation grundsätzlich nur zur Auslösung und Beendigung des Füllvorgangs, insbesondere zur Einstellung des minimalen und maximalen Füllstands. Eine Anpassung des Spülwasservolumenstroms erfolgt hingegen nicht, sodass zu Beginn des Spülvorgangs der Spülwasservolumenstrom maximal ist, was zu einem Spritzen von Spülwasser aus dem sanitären Becken führen kann.

Zusätzlich nimmt der Spülwasservolumenstrom und folglich der mit vom Spülwasservolumenstrom abhängige Spülimpuls mit sinkendem Füllstand ab, was bei starken Verschmutzungen zu einer ungenügenden Reinigung des WC-Beckens führen kann, sodass der Benutzer eine Nachreinigung des WC-Beckens manuell unter Zuhilfenahme einer WC-Reinigungsbürste oder dergleichen vornehmen muss.

Der erfasste Füllstand bzw. ein dazu korrelierendes Messsignal wird bei dem erfindungsgemäßen System von der elektrischen Messvorrichtung, bevorzugt einer kapazitiven, konduktiven, induktiven, magnetischen oder ultraschallbasierten Messvorrichtung, an die Steuerung der Vorrichtung gesendet, beispielsweise über eine Signalleitung oder über eine funktechnikbasierten Verbindung, und von der Steuerung ausgewertet. Vorzugsweise besitzt die Steuerung für eine Hinterlegung von Sollwerten des Füllstands eine Datenspeichereinheit und eine Recheneinheit zum Abgleich und zur Verarbeitung von mit dem Füllstand korrelierender Messsignale. Durch die erfindungsgemäße Erfassung des Füllstands im Spülkasten kann der Spülvorgang verbessert werden. Der Betrag des aus dem Ablauf des Spülkastens ausströmenden Spülwasservolumenstroms ist von der Höhe der Wassersäule im Spülkasten abhängig. Vor der Auslösung eines Spülvorgangs ist oder kann diese Höhe maximal sein, wodurch gegebenenfalls der maximale Spülwasservolumenstrom zu Beginn eines Spülvorgangs erreicht wird. Die in der erfindungsgemäßen Vorrichtung vorhandene Messvorrichtung überwacht den Füllstand in der Weise, dass ein mit der Vorrichtung verbind- und steuerbares Ventil, beispielsweise Ablaufventil oder Füllventil, den Spülwasservolumenstrom in Abhängigkeit des Füllstands beeinflussen kann.

Zusätzlich kann die erfindungsgemäße Erfassung des Füllstandes für ein Konstanthalten des Spülimpulses verwendet werden, indem die zeitlich variable Höhe der Wassersäule zur Bestimmung des resultierenden Spülwasservolumenstroms und zur Beeinflussung des Spülwasservolumenstroms genutzt wird. Ist die Vorrichtung in einem entsprechenden System integriert, kann der Spülwasservolumenstrom über den Spülvorgang konstant beziehungsweise in guter Näherung konstant gehalten werden.

Darüber hinaus können über die erfindungsgemäße Erfassung des Füllstands beliebige Spülmengen, insbesondere für eine Teil- und Vollspülung, und beliebige Füllstände eingestellt werden. Beispielsweise ist häufig keine vollständige Leerung des Spülkastens notwendig, sodass durch ein frühzeitiges Beenden des Spülvorgangs nur eine Teilmenge des Spülwassers in einer so genannten Teilspülung ausströmt. Da so nur bei Bedarf eine Vollspülung, also die vollständige oder nahezu vollständige Leerung des Spülkastens, durchgeführt wird, kann eine erhebliche Wasserersparnis erzielt werden. Im Falle einer mindestens räumlich kontinuierlichen Erfassung können der minimale und maximale Füllstand stufenlos gewählt werden, ohne eine Änderung etwaiger Messpunkte im Spülkasten vornehmen zu müssen.

Die in dem erfindungsgemäßen System enthaltene Vorrichtung zum Spülen eines WC- oder Urinalbeckens kann sowohl zur Verwendung als Aufputz- als auch zur Verwendung als Unterputzvorrichtung ausgeführt sein.

In einer weiteren Ausgestaltung des erfindungsgemäßen Systems weist die Messvorrichtung für eine räumlich diskontinuierliche Erfassung des Füllstands mehr als zwei, bevorzugt mehr als drei vertikal voneinander beabstandete Sensorelement auf. Bevorzugt ist die Messvorrichtung dabei so ausgestaltet, dass eine Vielzahl, insbesondere mehr als zwei, von voneinander vertikal beabstandete Sensorelemente von mindestens einem weiteren Sensorelement der Messvorrichtung horizontal beabstandet angeordnet ist, sodass die Messvorrichtung mindestens zwei separate und voneinander horizontal beabstandete Erfassungsorte des Füllstands aufweist. Bevorzugt umfasst die Vielzahl der voneinander vertikal beabstandeten Sensorelemente mehr als zwei Sensorelemente, wobei die Sensorelemente sowohl räumlich voneinander abhängig, beispielsweise auf einer gemeinsamen Platine, als auch räumlich unabhängig, beispielsweise als Sensorelemente einzelner Sensoren, sein können und mindestens die charakteristischen Füllstände, insbesondere den maximale und minimalen Füllstand, erfassen.

Vorzugsweise ist die Vielzahl oder Anzahl der voneinander vertikal beabstandeten Sensorelemente so gewählt, dass eine quasi-kontinuierliche räumliche Erfassung des Füllstands erreicht werden kann, und auch so, dass die resultierende vertikale Erstreckung der aus diesen Sensorelementen bestehenden Gruppe, insbesondere der vertikale Abstand zwischen dem Sensorelement im Bereich des Spülkastenbodens und dem der Spülkastenoberseite nächstliegenden Sensorelement dieser Gruppe, der vertikalen Erstreckung des mindestens einen weiteren Sensorelements der elektrischen Messvorrichtung entspricht. So erlaubt die Vielzahl der voneinander vertikal beabstandeten Sensorelemente eine Kontrolle des von einem oder mehreren der weiteren Sensorelementen der elektrischen Messvorrichtung erfassten Füllstands, wodurch Messungenauigkeiten verringert beziehungsweise kompensiert werden können. Dies gilt insbesondere für umgebungsinduzierte Messungenauigkeiten, beispielsweise durch die Temperaturabhängigkeit der relativen Permittivität von Wasser, oder für eine zu geringe Sensitivität mindestens eines der weiteren Sensorelemente der Messvorrichtung. Dazu vergleicht die Steuerung die jeweils erfassten Füllstände zeitlich kontinuierlich und/oder diskontinuierlich und bestimmt, beispielsweise durch Mittelung der erfassten Füllstände, den wahrscheinlichen Füllstand.

Besonders vorteilhaft kann die Steuerung selbsttätig die Korrelation zwischen Füllstand und Messsignal am Einsatzort der Vorrichtung anpassen. Weichen beispielsweise ermittelte Kapazitätswerte von in der Steuerung hinterlegten Kapazitätswerten bei einem entsprechenden Füllstand ab, kann eine Recheneinheit der Steuerung durch einen kontinuierlichen und/oder diskontinuierlichen Abgleich der von einem oder mehreren der weiteren Sensorelementen der Messvorrichtung und der Vielzahl der voneinander vertikal beabstandeten Sensorelementen der Messvorrichtung ermittelten Füllstände selbsttätig die in der Steuerung hinterlegte Korrelation zwischen Kapazität und Füllstand korrigieren und diese neue Korrelation für den weiteren Betrieb in einer der Recheneinheit zugeordneten Datenspeichereinheit hinterlegen. Hierzu ist die Vielzahl der voneinander vertikal beabstandeten Sensorelemente der Messvorrichtung vorteilhafterweise so angeordnet oder ausgebildet, dass ein Signal eines bestimmten Sensorelements einem bekannten Füllstand entspricht. Beispielsweise können hierfür Sensorelemente bei Füllständen von einem Liter bis fünf Liter in einem definierbaren vertikalen Abstand zueinander angeordnet sein. Eine Kalibrierung der Vielzahl der voneinander vertikal beabstandeten Sensorelemente für verschiedene Temperaturbereiche oder Wasserzusammensetzungen für verschiedene Einsatzorte ist somit nicht erforderlich. Zusätzlich kann bei einem Ausfall eines der weiteren Sensorelemente der Messvorrichtung der Füllstand alleinig durch die Vielzahl der voneinander vertikal beabstandeten Sensorelemente erfasst werden, sodass bei einer Fehlfunktion der weiteren Sensorelemente der Messvorrichtung der allgemeine Betrieb der Vorrichtung nicht unterbrochen werden muss.

Bevorzugt ist die Messvorrichtung als kapazitive Messvorrichtung ausgeführt. Eine kapazitive Messvorrichtung erlaubt eine zuverlässige Ermittlung des Füllstands des Spülkastens, wobei eine einfache Korrelation zwischen gemessener Kapazität und Füllstand besteht. Diese Korrelation ist vorzugsweise proportional beziehungsweise im Messbereich vorzugsweise proportional und in der Datenspeichereinheit der Steuerung hinterlegt. Eine kapazitive Messvorrichtung kann in einfacher Weise in den Spülkasten integriert werden, insbesondere da die Flächen des Kondensators beliebig angeordnet oder geformt sein können. Zusätzlich werden für den Betrieb der kapazitiven Messvorrichtung keine beweglichen Teile innerhalb des Spülkastens benötigt. Auch auf eine aufwendige Justierung der Messvorrichtung, wie es zum Beispiel bei Ultraschallsensoren notwendig wäre, kann verzichtet werden.

In einer vorteilhaften Ausgestaltung der Erfindung weist der Spülkasten mindestens einen elektrisch leitend ausgeführten Wandungsabschnitt auf. Die elektrisch leitende Ausführung mindestens eines Wandungsabschnitts ermöglicht die Verwendung dieses Wandungsabschnitts als eine Kondensatorfläche und somit als Teil eines der Sensorelemente für die Erfassung des Füllstands der kapazitiven Messvorrichtung, sodass beispielsweise die Kapazität in Abhängigkeit des Füllstands zwischen diesem Wandungsabschnitt und einer weiteren Kondensatorfläche eines der Sensorelemente der kapazitiven Messvorrichtung gemessen werden kann. Dementsprechend kann der Füllstand des Spülkastens bereits mit nur einer zusätzlich in den Spülkasten eingebrachten Kondensatorfläche als ein weiteres Sensorelement der Messvorrichtung bestimmt werden. Dies vereinfacht die Montage der Vorrichtung, beispielsweise in eine Vorwand, und reduziert die Kosten des Systems.

Nach einer weiteren vorteilhaften Ausgestaltung der Erfindung sind mindestens zwei voneinander horizontal oder vertikal beabstandete Wandungsabschnitte des Spülkastens elektrisch leitend ausgeführt. In dieser Ausgestaltung der Erfindung sind die mindestens zwei Wandungsabschnitte als Kondensatorflächen und somit als Teil der Sensorelemente der kapazitiven Messvorrichtung ausgestaltet. Bevorzugt liegen dabei die Wandungsabschnitte in derselben Ebene und können an einer beliebigen Seite oder an beliebigen Seiten des Spülkastens angeordnet werden, insbesondere gemeinsam an einer vertikalen Längs- oder Schmalseite oder an gegenüberliegenden vertikalen Längs- oder Schmalseiten. Die vertikale Längsseite des Spülkastens kann auch als vertikale Breitseite des Spülkastens bezeichnet werden. Auch ist es denkbar, dass ein Wandungsabschnitt der mindestens zwei Wandungsabschnitte an einer vertikalen Schmalseite und der zugehörige zweite Wandungsabschnitt an einer vertikalen Längsseite (Breitseite) des Spülkastens angeordnet sind. Somit kann auf in den Spülkasten eingebrachte Kondensatorflächen verzichtet werden, was die Montage der Vorrichtung weiter vereinfacht und die Systemkosten weiter senkt. Vorzugsweise befinden sich keine Kondensatorflächen innerhalb des Spülkastens, sodass dieser bei etwaigen Reparaturen oder Wartungsarbeiten nicht umständlich in einer Vorwand geöffnet werden muss. Auf eine Revisionsöffnung im Kastenkörper des Spülkastens als Zugang zum Spülkasteninneren kann somit gegebenenfalls verzichtet werden.

Eine in der Vorrichtung integrierte Elektronik ist für die Umwandlung der gemessenen Kapazität in ein geeignetes Signal, insbesondere in ein zum Füllstand direkt proportionales Signal, hergerichtet und vorzugsweise in der Messvorrichtung, in dem Wandungsabschnitt oder in der Steuerung untergebracht.

Unter Wandungsabschnitt wird im Kontext der vorliegenden Erfindung auch ein Teilbereich oder eine Oberfläche der den Spülkasten bildenden Wandungen verstanden. Auch werden nachträglich auf- oder angebrachte Teilbereiche als Wandungen verstanden. Die Wandungen können dabei sowohl den dem Spülwasser zugewandten als auch den dem Spülwasser abgewandten Oberflächen zugeordnet sein. Sind der oder die Wandungsabschnitte für einen Kontakt mit Wasser vorgesehen, ist der betreffende Wandungsabschnitt mit einer dielektrischen Beschichtung versehen.

Vorzugsweise weist bei einer Ausgestaltung der Erfindung, bei welcher in den Spülkasten mindestens eine Kondensatorfläche als Teil eines Sensorelements eingebracht ist, die Messvorrichtung eine Sonde als ein weiteres Sensorelement auf, wobei die Sonde mindestens einen sich im Wesentlichen vertikal erstreckenden Sondenabschnitt aufweist. Der Sondenabschnitt ist elektrisch leitend ausgeführt und von dem elektrisch leitend ausgeführten Wandungsabschnitt horizontal beabstandet. So kann in vorteilhafter Weise die durch die zeitliche und räumliche Änderung des Füllstands verursachte Kapazitätsänderung zur Ermittlung des Füllstands des Spülkastens genutzt werden.

Auch der voranstehend genannte Sondenabschnitt ist gegebenenfalls mit einer dielektrischen Beschichtung versehen, sofern eine Anordnung der Sonde innerhalb der Flüssigkeit gewünscht ist.

In einer weiteren Ausgestaltung der Erfindung ist der Wandungsabschnitt oder sind die Wandungsabschnitte flächig, insbesondere als Folie, Platte oder Streifen, ausgestaltet. Durch eine flächige Ausgestaltung der Wandungsabschnitte kann die maximal mögliche Kapazität des aus den Wandungsabschnitten gebildeten Kondensators erhöht und die Messgenauigkeit des Füllstands weiter verbessert werden, da größere Flächenabschnitte in einem konstanten Abstand zueinander angeordnet sind. Auch ermöglicht die flächige Ausgestaltung der elektrisch leitend ausgeführten Wandungsabschnitte eine gute Integrierbarkeit dieser Wandungsabschnitte in die Geometrie üblicher Spülkästen. Durch die Maximierung der Kondensatorflächen kann, bei gleichbleibender Kapazität, der Abstand zwischen den Kondensatorflächen vergrößert werden. Für eine Verwendung der Messvorrichtung ist keine spezielle Ausgestaltung der Spülkästen erforderlich, sodass eine gattungsgemäße Messvorrichtung mit den meisten oder sehr vielen der in der Sanitärtechnik üblichen Spülkästen kombinierbar ist. Auch kann durch solch eine Ausgestaltung der mindestens eine elektrisch leitendende Wandungsabschnitt direkt bei der Fertigung des Spülkastens in diesen integriert werden, indem ein entsprechendes Material für diesen Wandungsabschnitt vorgesehen wird. Auch ist es möglich, dass ein flächiger Wandungsabschnitt im Fertigungsprozess in den Spülkasten integriert wird; beispielsweise kann ein elektrisch leitender Wandungsabschnitt separat hergestellt und neben den Vorformling des Spülkastens in eine Blasformmaschine eingebracht werden. Nach dem Blasformen sind Spülkasten und Wandungsabschnitt miteinander verbunden.

Bevorzugt sind der oder die elektrisch leitend ausgeführten Wandungsabschnitte an den Längsseiten des Spülkastens angeordnet, sodass eine große Fläche einerseits und ein möglichst geringer Abstand der Flächen andererseits vorhanden sind. Unter Längsseiten werden dabei die Seiten des Spülkastens verstanden, die bei einer üblichen Anordnung des Spülkastens parallel zu einer Wand des betreffenden Gebäuderaumes verlaufen und regelmäßig eine größere horizontale Erstreckung als die Querseiten (Schmalseiten) des Spülkastens aufweisen. Unter den Längsseiten des Spülkastens werden hier insbesondere die Vorderseite und die Rückseite des Spülkastens verstanden. Ist eine Anordnung des elektrisch leitend ausgeführten Wandungsabschnitts oder solcher Wandungsabschnitte an den Längsseiten unvorteilhaft, können der Wandungsabschnitt oder die Wandungsabschnitte auch an den Querseiten (Schmalseiten) des Spülkastens, die üblicherweise orthogonal zu den Längsseiten des Spülkastens orientiert sind, angeordnet sein.

In einer weiteren vorteilhaften Ausgestaltung der in dem erfindungsgemäßen System enthaltenen Vorrichtung zum Spülen eines WC- oder Urinalbeckens ist der mindestens eine elektrisch leitend ausgeführte Wandungsabschnitt lösbar oder stoffschlüssig mit dem Spülkasten verbunden. Durch eine separate Fertigung und anschließende Anbringung des mindestens einen elektrisch leitenden Wandungsabschnitts können in der Vorrichtung auch bereits vorhandene Spülkästen genutzt werden, indem die Messvorrichtung, beispielsweise bestehend aus zwei Wandungsabschnitten oder aus einem Wandungsabschnitt und einer Sonde, nachträglich mit dem Spülkasten verbunden wird. Zusätzlich wird die Fertigung eines neuen Spülkastens vereinfacht, da die Wandungsabschnitte separat gefertigt werden können und das Spülkastendesign und der Spülkastenherstellungsprozess nicht speziell für die Verwendung einer solchen Messvorrichtung angepasst werden muss. Unter Anbringung wird jedes geeignete Verfahren zur Befestigung der Wandungsabschnitte an dem Spülkasten verstanden. Beispielsweise können der oder die Wandungsabschnitte mit dem Spülkasten verklebt, verschraubt, vernietet, reibverschweißt oder wärmeleitgefügt werden.

Vorzugsweise weist der mindestens eine elektrisch leitend ausgeführte Wandungsabschnitt oder die elektrisch leitend ausgeführten Wandungsabschnitte eine Höhenerstreckung von mindestens 100 mm, vorzugsweise mindestens 200 mm, besonders bevorzugt mindestens 250 mm, auf. Besonders bevorzugt ist die Höhenerstreckung der Sonde sowie des zweiten Wandungsabschnitts gleich oder nahezu gleich der Höhenerstreckung des ersten Wandungsabschnitts. Zur zeitlich und räumlich kontinuierlichen Erfassung des Füllstands ist es zweckmäßig, dass die Höhenerstreckung die gewünschten beziehungsweise benötigten Bereiche des Spülkastens umfasst. Beispielsweise sollten ein unterer und ein oberer Füllstand sowie alle beziehungsweise die wesentlichen dazwischenliegenden Füllstände durch die Messvorrichtung erfasst werden. Im Kontext der Erfindung ist als Höhenerstreckung der Abstand des untersten Rands eines Sensorelements bis zum höchsten Rand eines weiteren Sensorelements bezeichnet. Die elektrisch ausgeführten Wandungsabschnitte können einfach oder mehrfach durch nichtleitende Wandungsabschnitte vertikal unterbrochen sein, wobei jede zusammenhängende elektrisch leitende Fläche vorzugsweise ein Sensorelement darstellt.

Vorzugsweise ist die Höhenerstreckung so bemessen oder gewählt, dass ein optionaler und bevorzugt oberhalb des Zulaufs des Spülkastens angeordneter Überlauf ebenfalls bei der Füllstandmessung erfasst wird. So kann vorteilhafterweise die Steuerung auf einen unzulässig hohen Füllstand des Spülwassers innerhalb des Spülkastens reagieren. Zusätzlich können Wandungsabschnitte geringerer Höhenerstreckung auch in flachen Spülkästen verwendet werden. Eine noch größere Höhenerstreckung besitzt den Vorteil, dass der elektrisch leitend ausgeführte Wandungsabschnitt so positioniert werden kann, dass die gesamte Höhenerstreckung des Spülkastens von der Messvorrichtung erfasst wird. So kann ein unzulässig hoher Füllstand, beispielsweise bei einer Fehlfunktion des Füll- und/oder Ablaufventils oder eines verstopften Überlaufs, frühzeitig mittels der Messvorrichtung erkannt werden.

Besonders bevorzugt ist die in dem erfindungsgemäßen System enthaltene Vorrichtung zum Spülen eines WC- oder Urinalbeckens so ausgestaltet, dass der Innenraum des Spülkastens frei von mechanisch beweglichen Teilen ist. Hierdurch wird die Montage des Spülkastens, insbesondere in einer Vorwand, vereinfacht. Zusätzlich muss der Spülkasten nicht für eine Wartung oder Reparatur von Ventilen, zum Beispiel eines Ablaufventils, und/oder der Messvorrichtung geöffnet werden.

Je nach Einbaulage und Ausgestaltung des Sanitärgegenstands in Form eines WC- oder Urinalbeckens ist es zweckmäßig, dass bei modularen Systemen zur Wasserversorgung der maximale Spülwasservolumenstrom einstellbar ist, damit eine optimale Reinigung des Sanitärgegenstands erreicht und ein ungewolltes Spritzen von Spülwasser aus dem Sanitärgegenstand verhindert wird. Beispielsweise ist für randlose WC-Becken oder für Urinalbecken ein vergleichsweise geringer Spülwasservolumenstrom zweckmäßig, wohingegen bei herkömmlichen WC-Becken, die einen umlaufenden, nach innen vorstehenden Rand aufweisen, ein größerer Spülwasservolumenstrom für eine rückstandslose Reinigung vorgesehen werden kann. Hierzu verfügt das steuerbare Ablaufventil des Systems zur Versorgung eines Sanitärgegenstands, nämlich zum Spülen eines WC- oder Urinalbeckens, beispielsweise über einen einstellbaren Durchflussquerschnitt.

Das steuerbare Ablaufventil ist bevorzugt ein elektrisch und/oder elektromechanisch betätigtes Ablaufventil, sodass die Steuerung über eine Signalleitung oder über eine funktechnikbasierte Verbindung, Stellsignale an das Ablaufventil leiten und den Durchflussquerschnitt des Ablaufventils in Abhängigkeit des Stellsignals variieren kann. So steht beispielsweise zu Beginn des Spülvorgangs nur ein kleiner Durchflussquerschnitt zur Verfügung, um einen moderaten Spülwasservolumenstrom einzustellen. Je nach Benutzerwünschen kann nachfolgend der Durchflussquerschnitt automatisch durch die Steuerung angepasst werden, insbesondere vergrößert oder verkleinert werden. Hierzu kann das Ablaufventil als stufenloses Sitz- oder Schieberventil ausgeführt sein und über einen Aktuator, beispielsweise einen Elektromotor, verfügen. Entsprechend dem eingestellten oder angeforderten Spülwasservolumenstrom stellt der Aktuator nach einer Betätigung der Betätigungseinrichtung durch einen Benutzer den Durchflussquerschnitt des Ablaufventils ein und im Spülkasten bevorratetes Spülwasser strömt durch den Ablauf der Vorrichtung und über eine zwischen Ablauf und Sanitärgegenstand angeordnete Spülwasserleitung in den Sanitärgegenstand. Mittels des steuerbaren Ablaufventils ist auch die aus dem Spülkasten ausströmende Menge an Spülwasser einstellbar. Ist beispielsweise vom Benutzer eine Vollspülung angefordert, öffnet die Steuerung das Ablaufventil so lange, bis die einer Vollspülung entsprechende Menge an Spülwasser aus dem Spülkasten ausgeströmt ist. Entsprechendes gilt für eine Teilspülung, bei der das Ablaufventil für eine kürzere Zeitdauer geöffnet bleibt. Dabei kann die Steuerung die Menge automatisch über das Produkt aus Spülwasservolumenstrom und Zeitdauer erfassen.

Bei der Betätigungsvorrichtung handelt es sich beispielsweise um eine elektrische Betätigungsvorrichtung, die mit einer Signalleitung oder einer funktechnikbasierten Verbindung zur Steuerung versehen ist. Dabei kann die Betätigungsvorrichtung zur mechanischen Betätigung, beispielsweise in Form einer Drückerplatte oder für eine berührungslose Betätigung, beispielsweise durch Verwendung eines Näherungssensors, hergerichtet sein. Zur Auslösung eines Spülvorgangs betätigt der Benutzer die Betätigungsvorrichtung, welche daraufhin ein Anforderungssignal an die Steuerung sendet. Ist genügend Spülwasser im Spülkasten gespeichert, sendet die Steuerung ein Stellsignal an das Ablaufventil, welches den Ablauf der Vorrichtung freigibt, sodass sich ein Spülwasservolumenstrom zwischen Ablauf und Sanitärgegenstand einstellt. Hierfür ist der Sanitärgegenstand über eine Rohrleitung mit dem Ablauf der Vorrichtung verbunden.

Zulässige oder gewünschte Sollwerte für den Spülwasservolumenstrom können in der Steuerung dergestalt gespeichert sein, dass die Steuerung während eines Spülvorgangs den Durchflussquerschnitt des Ablaufventils automatisch einstellt. So kann ein Spritzen von Spülwasser verhindert beziehungsweise eine gründliche Reinigung erzielt werden. Zusätzlich ermöglicht das System eine akustische Optimierung des Spülgeräuschs, indem der Spülwasservolumenstrom an die nachfolgende Spülwasserleitung, die Einbausituation und die Raumakustik angepasst werden kann.

Im Kontext der vorliegenden Erfindung ist mit Durchflussquerschnitt derjenige Querschnitt gemeint, welcher bei einer gegebenen Ventilstellung dem Spülwasser beim Hindurchströmen durch das Ventil zur Verfügung steht.

In einer vorteilhaften Ausgestaltung des Systems ist die Steuerung zur Anpassung des Spülwasservolumenstroms in Abhängigkeit des Füllstands hergerichtet. Somit kann die Steuerung automatisch beispielsweise einen weitgehend oder nahezu konstanten Spülwasservolumenstrom über den gesamten Spülvorgang einstellen. Hierfür wird in Abhängigkeit des Füllstands der Durchflussquerschnitt des Ablaufventils variiert. Ein konstanter Spülwasservolumenstrom ermöglicht eine konstante Spülleistung, was insbesondere bei hartnäckigeren Verschmutzungen des Sanitärgegenstands vorteilhaft sein kann.

Für ein Realisieren eines variablen Füllwasservolumenstroms nach einem Spülvorgang ist das Füllventil des Systems über die Steuerung steuerbar hergerichtet. Vorzugsweise ist dazu das Füllventil ebenfalls als stufenloses Sitz- oder Schieberventil ausgebildet und elektrisch oder elektromechanisch einstellbar. Zum Empfangen von Stellsignalen ist das Füllventil über eine Signalleitung oder über eine funktechnikbasierte Verbindung mit der Steuerung verbunden. Für ein Befüllen des Spülkastens nach einer erfolgten Spülung öffnet das Füllventil, und Wasser aus einer Wasserversorgungsleitung strömt solange in den Spülkasten, bis beispielsweise der maximale Füllstand erreicht ist, oder die Steuerung aus einem anderen Grund ein Stellsignal zum Schließen an das Füllventil sendet. Das Füllventil kann dabei in der unmittelbaren oder der mittelbaren Umgebung des Spülkastens oder entfernt davon an einer beliebigen Position im Raum angeordnet sein.

Mittels des einstellbaren Füllwasservolumenstroms können die Fülleigenschaften der Vorrichtung verbessert werden. Beispielsweise kann der Füllwasservolumenstrom hinsichtlich der geringsten akustische Emission optimiert sein. Insbesondere nachts empfinden Personen ein lautes Befüllen eines Spülkastens nach einem Spülvorgang als unangenehm. Zusätzlich kann die Steuerung bedarfsgerecht die Zeitdauer des Befüllens minimieren, indem kurzzeitig der maximale Füllwasservolumenstrom eingestellt wird. Dies verringert die zur Befüllung des Spülkastens notwendige Zeitdauer auf ein Minimum. In vorteilhafter Weise kann so der Benutzer eine weitere Spülung innerhalb einer geringen Zeitdauer vornehmen, um im WC-Becken eventuell verbliebene Verschmutzungen zu entfernen. Dazu kann der Benutzer durch zweimaliges Betätigen der Betätigungseinrichtung eine weitere Spülung anfordern. Infolgedessen erhöht die Steuerung automatisch den Spülwasservolumenstrom und löst selbsttätig eine Spülung aus, wenn wieder genügend Spülwasser im Spülkasten vorhanden ist. Ein unnötiges Warten des Benutzers vor dem Sanitärgegenstands entfällt.

Auch ist es zur Verbesserung der Reinigungsleistung bei starken Verschmutzungen denkbar, dass das steuerbare Füllventil während des Spülvorgangs geöffnet wird und den Füllstand des Spülkastens weitgehend konstant hält, um einen nahezu konstanten Spülwasservolumenstrom bereitzustellen.

In einer weiteren Ausgestaltung des Systems ist ein Sensor zur Messung der Strömungsgeschwindigkeit des Spülwassers stromab des Ablaufs des Spülkastens angeordnet und mit der Steuerung verbunden. Die Messung der Strömungsgeschwindigkeit in einem Abschnitt stromab des Ablaufventils, beispielsweise im Spülrohr bzw. im Zulauf der Sanitärkeramik, ermöglicht eine optimale Anpassung des Spülwasservolumenstroms an den angeschlossenen Sanitärgegenstand, inklusive der angeschlossenen Spülrohrleitung.

Des Weiteren kann das System auch so ausgestaltet sein, dass die Steuerung eine Auswerte- und Signaleinheit aufweist und diese Einheit die Betriebszustände des Systems, insbesondere Fehlfunktionen eines der Ventile, erfasst und den Benutzer informiert. Beispielsweise kann ein nicht konstanter Füllstand außerhalb des Spül- oder Füllvorgangs ein Hinweis auf eine Fehlfunktion mindestens eines der Ventile sein. So kann ein unnötiger Wasserverbrauch durch eine Fehlfunktion eines der Ventile vermieden werden. Zur Information des Benutzers können insbesondere akustische und/oder optische Signaleinrichtungen in der Auswerte- und Signaleinheit integriert oder die Steuerung mit externen Signaleinrichtungen verbindbar sein. Dabei basiert die Verbindung entweder auf einer Signalleitung oder auf einer funktechnikbasierten Verbindung. Bevorzugt ist die optische Signaleinrichtung als Leuchtmittel ausgestaltet, welches den Benutzer über eine mögliche Fehlfunktion informiert. Zusätzlich kann die Auswerte- und Signaleinheit zur Anzeige des Füllstands hergerichtet sein. So kann beispielsweise das Leuchtmittel durch eine periodische Helligkeitsänderung einen Füllvorgang anzeigen. Ist dieser Vorgang abgeschlossen, erlischt das Leuchtmittel und das System ist für einen weiteren Spülvorgang bereit. So wird vermieden, dass durch einen ungeduldigen Benutzer ein weiterer Spülvorgang mit einem für eine gründliche Spülung unzureichenden Füllstand ausgelöst wird.

In einer weiteren bevorzugten Ausgestaltung des Systems kann mindestens eine weitere Betätigungseinrichtung zum Betätigen des Ablaufventils mit der Steuerung verbunden sein, wobei die erste Betätigungseinrichtung zum Betätigen des Ablaufventils im Bereich des Systems, vorzugsweise an einer gemeinsamen Wand, angeordnet ist und die weitere Betätigungseinrichtung entfernt vom System angeordnet ist. Beispielhaft ist die weitere Betätigungseinrichtung zum Betätigen des Ablaufventils in der Nähe des Zugangs eines Badezimmers oder Toilettenraums angeordnet, in welchem der betreffende Sanitärgegenstand untergebracht ist. Vergisst der Benutzer das Betätigen der ersten Betätigungseinrichtung oder hat der berührungslose Betätigungsmechanismus dieser Betätigungseinrichtung keinen Spülvorgang ausgelöst, kann der Benutzer in komfortabler Weise vor dem Verlassen des Badezimmers den Spülvorgang über die weitere Betätigungseinrichtung auslösen.

In einer weiteren Ausgestaltung kann die weitere Betätigungseinrichtung einem weiteren Sanitärgegenstand zugeordnet sein, welcher ebenfalls von dem System zur Versorgung eines Sanitärgegenstands mit Wasser versorgt wird. Insbesondere kann der weitere Sanitärgegenstand ein Urinalbecken sein. In dieser Ausgestaltung ist stromabwärts des Ablaufventils ein Wegeventil angeordnet oder das Ablaufventil als Wegeventil ausgestaltet. Insbesondere in Haushalten oder kleinen Gaststätten ist der verfügbare Platz für mehrere Spülkästen begrenzt und selten wird bei mehreren Sanitärgegenständen gleichzeitig ein Spülvorgang angefordert, sodass die Versorgung mehrerer sanitärer Becken über einen gemeinsamen Spülkasten vorteilhaft ist. Beispielsweise ist das System zur Versorgung der Sanitärgegenstände in einer Nische im Badezimmer eines Benutzers installiert, wobei der Spülkasten des Systems in der Wand untergebracht ist, an der das zugehörige WC-Becken befestigt ist. Ein ebenfalls an dem System angeschlossenes Urinalbecken und die weitere Betätigungseinrichtung können dabei entfernt, beispielsweise an einer anderen Wand montiert sein. In Abhängigkeit davon, welche Betätigungsvorrichtung betätigt wurde, sendet die Steuerung ein Stellsignal an das Ablaufventil und an das Wegeventil, um entweder den ersten Sanitärgegenstand oder den zweiten Sanitärgegenstand mit Spülwasser zu versorgen. Dabei berücksichtigt die Steuerung die dem jeweiligen Sanitärgegenstand zugeordnete Spülwassermenge und den Spülwasservolumenstrom in Abhängigkeit des Füllstands des Spülkastens. So kann das System effektiv zur Versorgung beider oder mehrerer Sanitärgegenstände genutzt, ein Herausspritzen von Spülwasser verhindert und der Platzbedarf eines Systems zur Versorgung mehrere Sanitärgegenstände reduziert werden. Auch ist es möglich, dass beispielsweise ein Haupt- und ein Gästebadezimmer durch eine gemeinsame Wand getrennt sind, der Spülkasten des Systems in dieser Wand angeordnet ist, und das System bzw. der Spülkasten die sanitären Becken im Haupt- sowie im Gästebadezimmer versorgt.

Im Rahmen einer Gebäudeautomation kann die in einer weiteren vorteilhaften Ausgestaltung des Systems zur Wasserversorgung enthaltene Steuerung über eine Datenschnittstelle zum Verbinden der Steuerung mit einem Smart-Device, insbesondere einem Smart-Home-System, einem Smartphone oder einem Heimnetzwerk, verfügen. Durch die Einbindung der Steuerung in ein Smart-Device können beispielsweise die Ein- und Ausgabemittel des Smart-Device oder der integrierten Haushaltsgeräte genutzt werden, um den Benutzer über den Füllstand im Spülkasten zu informieren, Bedienelemente des Smart-Devices zur Auslösung eines Spülvorgangs zu verwenden oder ein tageszeitabhängiges und gegebenenfalls ein vom Aufenthaltsort der Personen im Haushalt abhängiges Spül- und Füllverhalten zu erzielen. Vorzugsweise kann ein Spülvorgang von einem Benutzer mittels Sprachbefehl eingeleitet werden. So muss der Benutzer nach einer Benutzung des Sanitärgegenstands keine Betätigungseinrichtung mit seinen Händen berühren. Auch können so Eltern ihre Kinder bei dem Erlernen der Benutzung des Sanitärgegenstands unterstützen. Bevorzugt können auch die Ein- und Ausgabemittel, insbesondere ein Mikrophon, des Smart-Devices für eine akustische Kalibrierung des Systems eingesetzt werden. Für die akustische Kalibrierung führt das System mehrere Spül- und Füllvorgänge automatisch durch, während beispielsweise ein Smartphone im Badezimmer oder einem angrenzenden Raum platziert ist. Über das Mikrophon wird die resultierende akustische Emission gemessen und der Spül- und Füllwasservolumenstrom von der Steuerung zur Minimierung der akustischen Emissionen angepasst. Auch kann ein Smart-Device den Aufenthaltsort einer Person feststellen und einen Spülvorgang einleiten, sollte der Benutzer von keiner der zur Verfügung stehenden Optionen einer Spülvorgangsauslösung gebraucht gemacht haben und sich nun in einem anderen Bereich des Gebäudes befinden.

Auch ermöglicht die Verbindung der Steuerung mit einem Smart-Device die Möglichkeit, Spül- und Füllparameter beispielsweise über ein webbrowserbasiertes Portal einzustellen.

Vorzugsweise kann für eine benutzerfreundliche Beeinflussung der Spül- und Füllparameter, insbesondere der Spülwassermenge, des Spülwasservolumenstroms, der Füllgeschwindigkeit, des minimalen Füllstands und/oder des maximalen Füllstands, eine Applikation auf dem Smart-Device installiert sein. Mittels dieser Applikation kann der Benutzer beispielsweise verschiedene Spülmodi auswählen, bei denen der Spülwasservolumenstrom an das zu versorgende sanitäre Becken angepasst wird, ein maximaler Spülwasservolumenstrom für eine optimale Reinigung ausgewählt wird, oder die akustischen Emissionen während des Spül- und/oder Füllvorgangs minimiert werden. Auch der maximale und minimale Füllstand sowie die pro Spülvorgang verwendete Spülwassermenge können über die Applikation beeinflusst werden. Bei Bedarf kann zusätzlich der Verbrauch an Spülwasser in einem Protokoll erfasst werden und beispielsweise bei der Erstellung einer Nebenkostenabrechnung unterstützen oder Wassereinsparpotential offenbaren.

Des Weiteren können die Steuerung und das Ablaufventil des Systems so hergerichtet sein, dass nach einer vorgegebenen oder vorgebbaren Zeitdauer im Falle einer Nichtbenutzung des Sanitärgegenstands ein selbsttätiges Auslösen eines Spülvorgangserfolgt.

In vorteilhafter Weise kann so die Steuerung nach einer längeren Nichtbenutzung selbsttätig einen Spülvorgang einleiten und somit Wasser in einer den Spülkasten versorgenden Trinkwasserleitung durch frisches Trinkwasser ersetzen, sodass eine Verkeimung von Trinkwasser infolge einer längeren Wasserstagnation verhindert wird.

Nachfolgend wird die Erfindung anhand einer mehrere Ausführungsbeispiele darstellenden Zeichnung näher erläutert. Es zeigen schematisch:
- Fig. 1: ein erfindungsgemäßes System zur Wasserversorgung eines Sanitärgegenstandes in einer Vorderansicht;
- Fig. 2a: eine Vorrichtung zum Spülen eines sanitären Beckens für ein erfindungsgemäßes System, mit einer eine Sonde aufweisenden Messvorrichtung, in einer Seitenansicht;
- Fig. 2b: eine Vorrichtung zum Spülen eines sanitären Beckens für ein erfindungsgemäßes System, mit einer Messvorrichtung, die zwei elektrisch leitend ausgeführte Wandungsabschnitte aufweist, in einer Seitenansicht;
- Fig. 3: ein erfindungsgemäßes System zur Wasserversorgung von zwei Sanitärgegenständen in einer Vorderansicht; und
- Fig. 4: mehrere Vorrichtungen zum Spülen eines sanitären Beckens für erfindungsgemäße Systeme, mit verschiedenen Anordnungsmöglichkeiten der mindestens zwei elektrisch leitend ausgeführten Wandungsabschnitte, in einer Draufsicht.

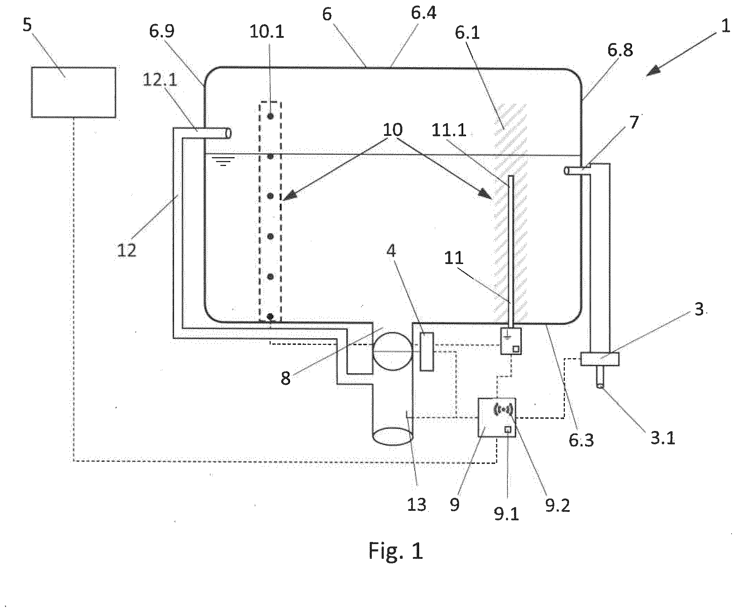

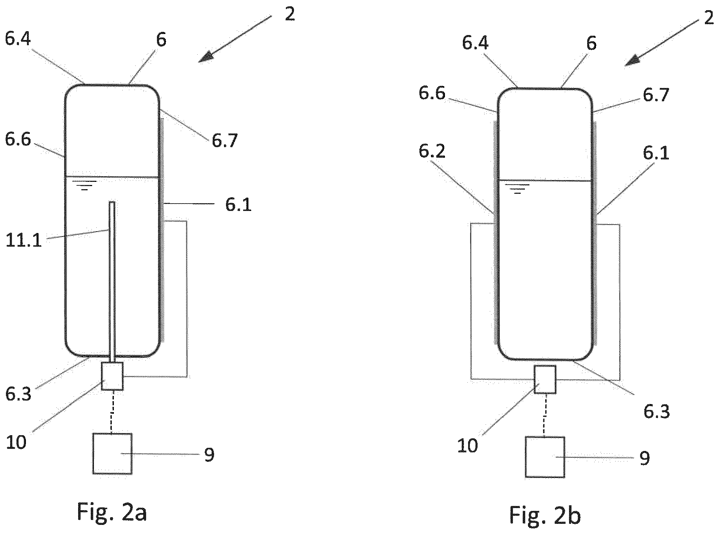

Das in Fig. 1 gezeigte System 1 zur Wasserversorgung eines Sanitärgegenstands weist eine Vorrichtung zum Spülen eines sanitären Beckens, beispielsweise eines WC- oder Urinalbeckens, auf. Die Vorrichtung zum Spülen eines sanitären Beckens ist beispielsweise wie die in Fig. 2a dargestellte Vorrichtung 2 ausgeführt. Des Weiteren umfasst das System 1 ein Füllventil 3, ein Ablaufventil 4 und eine Betätigungseinrichtung 5 zum Betätigen des Ablaufventils 4.

Die Vorrichtung 2 bzw. das System weist einen Spülkasten 6 auf, der zur Aufnahme von Wasser ausgebildet ist und über einen Zulauf 7 und einen Ablauf 8 verfügt. Ferner umfasst die Vorrichtung 2 eine Steuerung 9 sowie eine Messvorrichtung 10 zur Messung des Füllstands im Spülkasten 6, wobei die Messvorrichtung 10 als kapazitive Messvorrichtung ausgeführt ist und über eine Signalleitung mit der Steuerung 9 verbunden ist. Die Messvorrichtung 10 ist hergerichtet, um eine zeitlich und räumlich kontinuierliche Erfassung des Füllstands und/oder eine zeitlich und räumlich diskontinuierliche Erfassung des Füllstands und/oder eine zeitlich kontinuierliche und räumlich diskontinuierliche Erfassung des Füllstands und/oder eine zeitlich diskontinuierliche und räumlich kontinuierliche Erfassung des Füllstands zu ermöglichen. Die Messvorrichtung 10 umfasst mehrere Sensorelemente 6.1, 6.2, 10.1, wobei die Sensorelemente 10.1 beispielsweise als sechs voneinander vertikal beabstandete Sensorelemente ausgeführt und horizontal von den weiteren Sensorelementen 6.1, 6.2 beabstandet sind und zur weiteren Erfassung des Füllstands hergerichtet sind. Die voneinander vertikal beabstandeten Sensorelemente 10.1 sind dabei so angeordnet, dass der Füllstand des Spülkastens 6 räumlich diskontinuierlich und zeitlich kontinuierlich erfasst werden kann. Der Zulauf 7 ist mit dem Füllventil 3 für ein Befüllen des Spülkastens 6 mit Wasser verbunden, wobei das Füllventil 3 eine Wasserzufuhrleitung 3.1 bei Erreichen eines ausreichenden Füllstands sperrt. Der Ablauf 8 ist durch das Ablaufventil 4 absperrbar, sodass kein Spülwasser den Spülkasten 6 über den Ablauf 8 verlässt, solange das Ablaufventil 4 gesperrt ist. Wird durch einen Benutzer eine Spülung ausgelöst, öffnet das Ablaufventil 4 und Spülwasser kann den Spülkasten 6 durch den Ablauf 8 verlassen. Nach Beendigung des Spülvorganges schließt das Ablaufventil 4. Anschließend oder bereits vorher wird das Füllventil 3 geöffnet, sodass über die Wasserzufuhrleitung 3.1 Wasser durch den Zulauf 7 in den Spülkasten 6 gelangt. Das Füllventil 3 schließt automatisch, sobald ein definierter maximaler Füllstand erreicht ist.

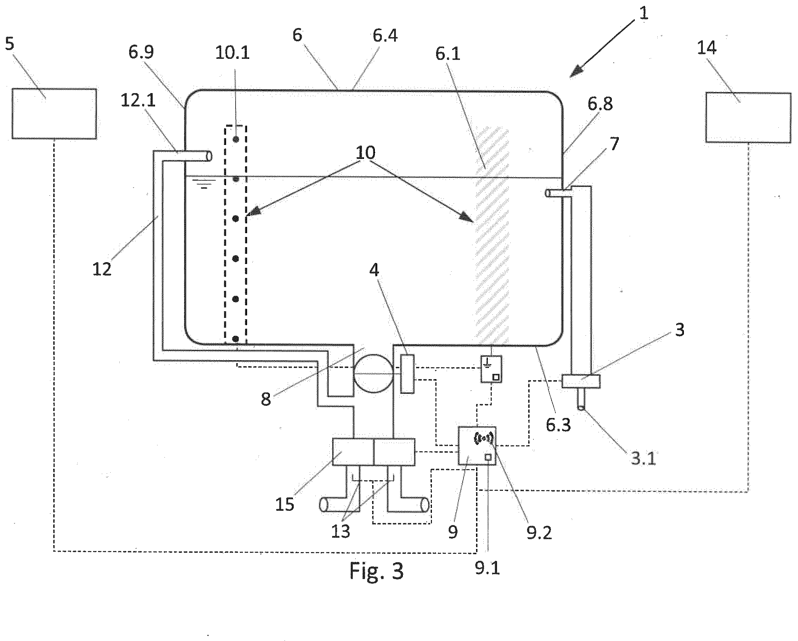

In dem in den Figuren 1 und 2a gezeigten Ausführungsbeispiel der Vorrichtung 2 ist ein Wandungsabschnitt 6.1 des Spülkastens 6 elektrisch leitend ausgeführt, um als Kondensatorfläche eines Sensorelements 6.1 für eine kapazitive Erfassung des Spülwasser-Füllstands dienen zu können. Bei den in den Figuren 2b und 3 dargestellten Ausführungsbeispielen weist der Spülkasten 6 dagegen zwei elektrisch leitend ausgeführte Wandungsabschnitte 6.1, 6.2 auf, welche ebenfalls als Kondensatorflächen jeweils eines Sensorelements 6.1, 6.2 für eine kapazitive Erfassung des Spülwasser-Füllstands dienen.

Zur kapazitiven Erfassung des Füllstands hat die Messvorrichtung 10 in dem in den Figuren 1 und 2a gezeigten Ausführungsbeispiel zudem ein als Sonde 11, ausgeführtes Sensorelement 6.2, wobei die Sonde 11 einen sich im Wesentlichen vertikal erstreckenden Sondenabschnitt 11.1aufweist. Dieser Sondenabschnitt 11.1 ist elektrisch leitend ausgeführt und von dem Wandungsabschnitt 6.1 horizontal beabstandet. Dieser Sondenabschnitt 11.1 stellt ebenfalls eine Kondensatorfläche dar. Bei dem gezeigten Ausführungsbeispiel erstreckt sich der Sondenabschnitt 11.1 vom Boden 6.3 des Spülkastens 6 in Richtung Spülkastendeckel oder Spülkastenoberseite 6.4. In anderen Ausgestaltungen der Vorrichtung 2 kann sich der Sondenabschnitt 11.1 auch vom Spülkastendeckel oder von der Spülkastenoberseite 6.4 in Richtung Boden 6.3 erstrecken.

Die in den in Fig. 2a und 2b gezeigten Wandungsabschnitte 6.1 und 6.2 sind flächig als außenliegende Folienstreifen ausgebildet und lösbar oder stoffschlüssig mit dem Spülkasten 6 verbunden. In dem Ausführungsbeispiel gemäß Fig. 2a ist der mindestens eine Wandungsabschnitt 6.1 an einer ersten Längsseite 6.6, beispielsweise an der Vorderseite oder Rückseite des Spülkastens 6 angebracht. In dem Ausführungsbeispiel gemäß Fig. 2b sind die elektrisch leitend ausgeführten Wandungsabschnitte 6.1 und 6.2 an einer ersten Längsseite 6.6 und einer dazu parallel verlaufenden zweiten Längsseite 6.7, beispielsweise an der Vorderseite und der dazu parallel verlaufenden Rückseite des Spülkastens 6, lösbar oder stoffschlüssig mit dem Spülkasten 6 verbunden. Auch eine Anordnung an den vertikalen Querseiten oder Schmalseiten 6.8 und 6.9 des Spülkastens 6 ist möglich (vgl. Fig. 1 und 3).

Der Wandungsabschnitt 6.1 erstreckt sich vertikal von dem Boden 6.3 in Richtung Spülkastendeckel oder Spülkastenoberseite 6.4 des Spülkastens 6. Somit sind insbesondere der niedrigste Füllstand im Bereich des Bodens 6.3, der maximale Füllstand kurz unterhalb des Zulaufs 7, der Zulauf 7 sowie die Öffnung 12.1 eines Überlaufs 12 messtechnisch erfasst, wobei die Höhenerstreckung des Wandungsabschnitts 6.1 beispielsweise mindestens 250 mm beträgt.

Das Füllventil 3 und das Ablaufventil 4 sowie die Betätigungseinrichtung 5 sind über Signalleitungen mit der Steuerung 9 verbunden, wobei die Steuerung 9 zur Betätigung und/oder Regelung beider Ventile 3, 4 und zum Empfang eines Signals der Betätigungseinrichtung 5 hergerichtet ist.

Wird die Betätigungseinrichtung 5 betätigt, so sendet die Betätigungseinrichtung 5 ein Signal an die Steuerung 9, die ein Stellsignal zum Öffnen an das Ablaufventil 4 leitet, woraufhin Spülwasser zur Spülung eines strömungstechnisch mit dem Spülkasten 6 verbundenen WC- oder Urinalbeckens über den Ablauf 8 aus dem Spülkasten 6 mit einem variablen einstellbaren Spülwasservolumenstrom strömt. Hierzu verfügt das Ablaufventil 4 über einen durch die Steuerung 9 einstellbaren variablen Durchflussquerschnitt.

Zur Verbesserung der Spülung des WC- oder Urinalbeckens passt die Steuerung 9 den Spülwasservolumenstrom in Abhängigkeit des Füllstands des Spülkastens 6 an, um beispielsweise ein Herausspritzen von Spülwasser aus dem WC- oder Urinalbecken während des Spülvorgangs zu unterbinden. Hierzu übermittelt die Steuerung 9 ein Stellsignal an das Ablaufventil 4 in Abhängigkeit des von der Messvorrichtung 10 gemessenen Füllstands. Ist zum Zeitpunkt der Betätigung der Betätigungseinrichtung 5 der Füllstand maximal, drosselt die Steuerung 9 den Spülwasservolumenstrom durch eine entsprechende Einstellung des Durchflussquerschnitts des Ablaufventils 4. Ist ein großer Spülwasservolumenstrom durch eine entsprechende Betätigung, beispielsweise einer zeitlich langen Betätigung, der Betätigungseinrichtung 5 durch den Benutzer gefordert, so kann die Steuerung 9 einen entsprechenden Durchflussquerschnitt des Ablaufventils 4 einstellen und keine Drosselung des Spülwasservolumenstroms vornehmen.

Die Steuerung 9 beendet den Spülvorgang durch Senden eines Stellsignals zum Schließen des Ablaufventils 4 wahlweise nach einer definierbaren Zeitdauer, einer definierbaren Änderung des Füllstands oder nach einem vollständigen Verbrauch des im Spülkasten 6 vorgehaltenen Spülwassers. Beispielsweise beendet die Steuerung 9 den Spülvorgang nach dem Ausströmen einer Teilmenge des Spülwassers, falls der Benutzer, durch entsprechendes Betätigen der Betätigungseinrichtung 5, eine Teilspülung, d. h. eine Spülung mit einer relativ geringen Spülwassermenge ausgelöst hat.

Zum Befüllen des Spülkastens 6 sendet die Steuerung 9 ein Signal zum Öffnen an das Füllventil 3. Frisches Spülwasser (Frischwasser) strömt bis zur Beendigung des Füllvorgangs aus der Wasserzufuhrleitung 3.1 über den Zulauf 7 in den Spülkasten 6. Ist ein definierbarer Füllstand im Spülkasten 6 erreicht, sendet die Steuerung 9 ein Stellsignal zum Schließen an das Füllventil 3, das daraufhin die Wasserzufuhrleitung 3.1 sperrt.

Für eine Verbesserung des Füllvorgangs verfügt auch das Füllventil 3 über einen variablen und durch die Steuerung 9 einstellbaren Durchflussquerschnitt. So kann der Füllwasservolumenstrom so eingestellt werden, dass der Füllvorgang möglichst leise erfolgt.

Das erfindungsgemäße System bietet ferner folgende Option: Fordert ein Benutzer kurz nach einem ersten Spülvorgang einen weiteren Spülvorgang an, beispielsweise durch eine nochmalige Betätigung der Betätigungseinrichtung 5, so wird für ein schnelleres Befüllen des Spülkastens 6 der Durchflussquerschnitt des Füllventils 3 durch die Steuerung 9 entsprechend eingestellt. Nach Erreichen eines definierbaren Füllstands im Spülkasten 6 öffnet die Steuerung 9 automatisch das Ablaufventil 4 und der angeforderte weitere Spülvorgang startet.

Für eine optimale Anpassung des Spülwasservolumenstroms an das Spülrohr und das angeschlossene Sanitärbecken ist für eine Messung der resultierenden Strömungsgeschwindigkeit ein Sensor 13 stromab des Ablaufs 8 des Spülkastens 6 angeordnet und über eine Signalleitung mit der Steuerung 9 verbunden. Beispielsweise ist ein solcher Sensor 13 in einem einzelnen, zum Sanitärbecken führenden Spülrohr (vgl. Fig. 1) oder in zweifacher Ausführung in mehreren Spülrohrleitungen (vgl. Fig. 3) angeordnet.

In den gezeigten Ausführungsbeispielen ist die zur Erfassung der Betriebszustände, insbesondere von Fehlfunktionen eines der Ventile 3, 4, und zur Information des Benutzers ausgebildete Auswerte- und Signaleinheit 9.1 in die Steuerung 9 integriert. Ein Abgleich der gespeicherten und vorgebbaren Sollwerte des Füllstands mit dem durch die Messvorrichtung 10 ermittelten Istwert des Füllstands erfolgt zeitlich kontinuierlich und eine optische Signaleinrichtung der Auswerte- und Signaleinheit 9.1, die beispielsweise in die Betätigungsvorrichtung 5 integriert ist, informiert den Benutzer durch Lichtsignale über unzulässige Istwerte des Füllstands.

Das in Fig. 3 gezeigte System ist zum wahlweisen Spülen von mindestens zwei Sanitärbecken, beispielsweise von zwei Urinalbecken oder von einem WC-Becken in Kombination mit einem Urinalbecken ausgestaltet und umfasst eine weitere mit der Steuerung 9 verbundene Betätigungseinrichtung 14. Ein stromabwärts des Ablaufventils 4 angeordnetes Wegeventil 15 ist über eine Signalleitung mit der Steuerung 9 verbunden und zur wahlweisen Lenkung des Spülwasservolumenstroms in eine von mehreren Spülrohrleitungen vorgesehen. In Abhängigkeit davon, welche Betätigungseinrichtung 5, 14 von einem Benutzer betätigt wurde, sendet die Steuerung 9 ein Stellsignal an das Wegeventil 15. Daraufhin gibt das Wegeventil 15 entweder den Durchfluss zu dem ersten oder zu dem zweiten Sanitärbecken frei. So wird bei einer Betätigung der ersten Betätigungseinrichtung 5 das erste Sanitärbecken und bei einer Betätigung der zweiten Betätigungseinrichtung 14 das zweite Sanitärbecken gespült.

Für einen erhöhten Bedienungskomfort ist die Steuerung 9 über eine Datenschnittstelle 9.2 mit einem Smart-Home-System verbunden, sodass der Benutzer durch Betätigen oder Benutzen von Eingabemitteln des verbundenen Smart-Home-Systems eine Spülung auslösen kann. Vorzugsweise weist das Smart-Home-System ein Mikrophon zur sprachgesteuerten Auslösung des Spülvorgangs auf. Gibt der Benutzer ein entsprechendes akustisches Kommando, sendet das Smart-Home-System ein Anforderungssignal an die Steuerung 9, die den Spülvorgang einleitet. Ferner kann das Mikrophon zur Einstellung der akustischen Emission sowohl des Spülvorgangs als auch des Füllvorgangs verwendet werden. Dazu führt die Steuerung 9 automatisch mehrere Spül- und Füllvorgänge durch und variiert den Spülwasservolumenstrom und den Füllwasservolumenstrom, wobei das Smart-Home-System die akustische Emission eines jeden Vorgangs mittels des Mikrophones aufnimmt und mit der vorherigen Emission vergleicht. Diese Prozedur wird solange wiederholt, bis eine minimale akustische Emission ermittelt wurde. Die der minimalen Emission zugeordneten Werte der Volumenströme werden anschließenden in der Steuerung 9 gespeichert und als Standardwerte bei weiteren Spül- und Füllvorgängen verwendet. Diese Werte können jedoch auch von einem Benutzer manuell über einen Zugriff auf die Steuerung 9 mittels eines Webbrowsers gesetzt werden.

Auf dem Smart-Home-System ist vorzugsweise eine Applikation installiert, mit welcher ein Benutzer eine intuitive Beeinflussung der Spülparameter vornehmen kann. Dabei kann der Benutzer die Spülwassermenge bei Teil- und Vollspülung, den Spülwasservolumenstrom, die Geschwindigkeit des Füllvorgangs, den minimalen Füllstand und/oder den maximalen Füllstand stufenlos anpassen.

In Ferienwohnungen, in öffentlichen Einrichtungen oder in Privathaushalten kann es zu längeren Phasen einer Nichtbenutzung eines Trinkwasserleitungsnetzes kommen, sodass das Risiko einer Verkeimung des stagnierenden Trinkwassers besteht. Um einer Verkeimung von Trinkwasser vorzubeugen, ist die Steuerung 9 des Systems so ausgebildet, dass nach einer definierbaren Zeitdauer ein Spülvorgang selbsttätig ausgeführt wird. Dazu definiert der Benutzer die Zeitdauer mittels des Smart-Home-Systems. Nach Ablauf der definierbaren Zeitdauer sendet die Steuerung 9 ein Stellsignal an das Ablaufventil 4, welches daraufhin öffnet. Nach vollständigem Ausfluss des Spülwassers aus dem Spülkasten 6 schließt das Ablaufventil 4 und das Füllventil 3 wird für einen Füllvorgang solange geöffnet, bis der eingestellte Sollwert des Füllstands erreicht ist. So kann eine Verkeimung von Trinkwasser in der den Spülkasten versorgenden Wasserzufuhrleitung 3.1 verhindert werden.

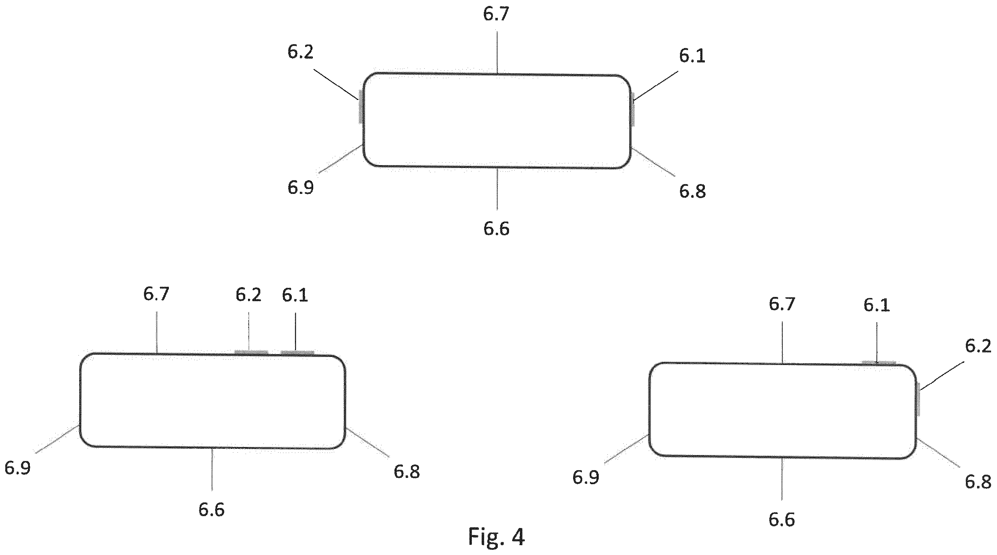

Die Anordnung der elektrisch leitenden Wandungsabschnitte 6.1, 6.2 ist nicht auf ein Anbringen an den Längsseiten 6.6 und 6.7 beschränkt. Vielmehr sind auch die in Fig. 4 dargestellten Anordnungen möglich, wonach die beiden Wandungsabschnitte 6.1, 6.2 auch an den gegenüberliegenden Schmalseiten 6.8, 6.9, an einer gemeinsamen Längsseite 6.7 oder an einer Längsseite 6.7 und einer Schmalseite 6.8 angeordnet sein können.

Die Ausführung der Erfindung ist nicht auf die in der Zeichnung dargestellten Ausführungsbeispiele beschränkt. Vielmehr sind zahlreiche Varianten denkbar, die auch bei einer von den Ausführungsbeispielen abweichenden Gestaltung von der Erfindung und ihren in den beigefügten Ansprüchen angegebenen Ausgestaltungen Gebrauch machen.

## Patentansprüche

1. System zur Wasserversorgung,
mit einer Vorrichtung (2) zum Spülen eines WC- oder Urinalbeckens,
mit einem Spülkasten (6) zur Aufnahme von Wasser, der einen Zulauf (7) und einen Ablauf (8) aufweist,
mit einem Füllventil (3) und einem Ablaufventil (4),
mit einer Betätigungseinrichtung (5) zum Betätigen des Ablaufventils (4),
mit einer als elektrische Messvorrichtung ausgeführten Messvorrichtung (10) zur Messung eines Füllstands im Spülkasten (6), wobei die Messvorrichtung (10) für eine zeitlich und räumlich kontinuierliche Erfassung des Füllstands und/oder für eine zeitlich und räumlich diskontinuierliche Erfassung des Füllstands und/oder für eine zeitlich kontinuierliche und räumlich diskontinuierliche Erfassung des Füllstands und/oder für eine zeitlich diskontinuierliche und räumlich kontinuierliche Erfassung des Füllstands hergerichtet ist und wobei die Messvorrichtung (10), falls sie für eine räumlich diskontinuierliche Erfassung des Füllstands hergerichtet ist, mehr als zwei, bevorzugt mehr als drei Sensorelemente (6.1, 6.2, 10.1) für eine Erfassung des Füllstands aufweist, und mit einer Steuerung (9), die zur Betätigung und/oder Regelung des Füllventils (3) und des Ablaufventils (4) hergerichtet ist, wobei das Ablaufventil (4) derart steuerbar ist, dass es einen variablen Spülwasservolumenstrom zulässt und die Steuerung (9) zur Anpassung des Spülwasservolumenstroms hergerichtet ist.

2. System nach Anspruch 1,
**dadurch gekennzeichnet, dass** die Steuerung (9) zur Anpassung des Spülwasservolumenstroms in Abhängigkeit des Füllstands, hergerichtet ist.

3. System nach Anspruch 1 oder 2,
**dadurch gekennzeichnet, dass** die Steuerung (9) mit einer Auswerte- und Signaleinheit (9.1) versehen ist, die zur Erfassung und Signalisierung von Betriebszuständen des Systems, insbesondere Fehlfunktionen eines der Ventile (3, 4) hergerichtet ist.

4. System nach einem der Ansprüche 1 bis 3,
**dadurch gekennzeichnet, dass** eine weitere Betätigungseinrichtung (14) zum Betätigen des Ablaufventils (4) mit der Steuerung (9) verbunden ist.

5. System nach einem der Ansprüche 1 bis 4,
**dadurch gekennzeichnet, dass** die Steuerung (9) über eine Datenschnittstelle (9.2) zum Verbinden der Steuerung (9) mit einem Smart-Device, insbesondere einem Smart-Home-System, einem Smartphone oder einem Heimnetzwerk, verfügt.

6. System nach Anspruch 5, **dadurch gekennzeichnet, dass** eine Applikation auf dem Smart-Device zur Beeinflussung von mindestens einem Spülparameter, insbesondere der Spülwassermenge, des Spülwasservolumenstroms, der Füllgeschwindigkeit, des minimalen Füllstands und/oder des maximalen Füllstands, hergerichtet ist.

7. System nach einem der Ansprüche 1 bis 6,
**dadurch gekennzeichnet, dass** die Steuerung (9) und das Ablaufventil (4) nach einer vorgegebenen oder vorgebbaren Zeitdauer im Falle einer Nichtbenutzung des Sanitärgegenstands für ein selbsttätiges Auslösen eines Spülvorgangs hergerichtet sind.

## Claims

1. Water supply system,
with a device (2) for flushing a toilet or urinal bowl,
with a flush tank (6) for holding water, which has an inlet (7) and an outlet (8),
with a filling valve (3) and a drain valve (4),
with an actuating device (5) for actuating the drain valve (4),
with a measuring device (10) designed as an electrical measuring device for measuring a fill level in the flush tank (6), wherein the measuring device (10) is designed for continuous detection of the fill level in terms of time and space and/or for discontinuous detection of the fill level in terms of time and space and/or for continuous detection of the fill level in terms of time and discontinuous detection of the fill level in terms of space and/or for a temporally discontinuous and spatially continuous detection of the fill level, and wherein the measuring device (10), if it is designed for a spatially discontinuous detection of the fill level, has more than two, preferably more than three sensor elements (6.1, 6.2, 10.1) for detecting the fill level, and with a control device (9) which is designed for actuating and/or regulating the fill valve (3) and the drain valve (4), wherein the the drain valve (4) is controllable in such a way that it allows a variable flushing water volume flow and the control device (9) is designed to adjust the flushing water volume flow.

2. System according to claim 1,
**characterised in that** the control device (9) is designed to adjust the flushing water volume flow depending on the fill level.

3. System according to claim 1 or 2,
**characterised in that** the control device (9) is provided with an evaluation and signal unit (9.1) which is designed to detect and signal operating states of the system, in particular malfunctions of one of the valves (3, 4).

4. System according to any of claims 1 to 3,
**characterised in that** a further actuating device (14) for actuating the drain valve (4) is connected to the control device (9).

5. System according to any one of claims 1 to 4,
**characterised in that** the control device (9) has a data interface (9.2) for connecting the control device (9) to a smart device, in particular a smart home system, a smartphone or a home network.

6. System according to claim 5, **characterised in that** an application on the smart device is designed to influence at least one flushing parameter, in particular the flushing water quantity, the flushing water volume flow, the filling speed, the minimum fill level and/or the maximum fill level.

7. System according to any of claims 1 to 6,
**characterised in that** the control device (9) and the drain valve (4) are designed to automatically trigger a flushing process after a predetermined or predeterminable period of time if the sanitary fixture is not used.

## Revendications

1. Système d'approvisionnement en eau,
avec un dispositif (2) pour rincer une cuvette de WC ou d'urinoir,
avec un réservoir de chasse (6) destiné à recevoir de l'eau, qui présente une arrivée (7) et une écoulement (8),
avec une soupape de remplissage (3) et une soupape d'écoulement (4),
avec un dispositif d'actionnement (5) pour actionner la soupape d'écoulement (4),
avec un dispositif de mesure (10) réalisé sous la forme d'un dispositif de mesure électrique pour mesurer un niveau de remplissage dans le réservoir de chasse (6), le dispositif de mesure (10) étant conçu pour une détection continue dans le temps et dans l'espace du niveau de remplissage et/ou pour une détection discontinue dans le temps et dans l'espace du niveau de remplissage et/ou pour une détection continue dans le temps et discontinue dans l'espace du niveau de remplissage et/ou pour une détection discontinue dans le temps et continue dans l'espace du niveau de remplissage, et dans lequel le dispositif de mesure (10), s'il est conçu pour une détection discontinue dans l'espace du niveau de remplissage, comporte plus de deux, de préférence plus de trois éléments capteurs (6.1, 6.2, 10.1) pour la détection du niveau de remplissage, et avec une commande (9) qui est conçue pour l'actionnement et/ou la régulation de la soupape de remplissage (3) et de la soupape d'écoulement (4), la soupape d'écoulement (4) pouvant être commandée de telle sorte qu'elle autorise un débit d'eau de rinçage variable et la commande (9) étant conçue pour adapter le débit d'eau de rinçage.

2. Système selon la revendication 1,
**caractérisé en ce que** la commande (9) est conçue pour adapter le débit d'eau de rinçage en fonction du niveau de remplissage.

3. Système selon la revendication 1 ou 2,
**caractérisé en ce que** la commande (9) est équipée d'une unité d'évaluation et de signalisation (9.1) qui est conçue pour détecter et signaler les états de fonctionnement du système, en particulier les dysfonctionnements de l'une des soupapes (3, 4).

4. Système selon l'une des revendications 1 à 3,
**caractérisé en ce qu'**un autre dispositif d'actionnement (14) destiné à actionner la soupape d'écoulement (4) est relié à la commande (9).

5. Système selon l'une des revendications 1 à 4,
**caractérisé en ce que** la commande (9) dispose d'une interface de données (9.2) pour relier la commande (9) à un appareil intelligent, en particulier un système domotique, un smartphone ou un réseau domestique.

6. Système selon la revendication 5, **caractérisé en ce qu'**une application est prévue sur le dispositif intelligent pour influencer au moins un paramètre de rinçage, en particulier la quantité d'eau de rinçage, le débit d'eau de rinçage, la vitesse de remplissage, le niveau de remplissage minimal et/ou le niveau de remplissage maximal.

7. Système selon l'une des revendications 1 à 6,
**caractérisé en ce que** la commande (9) et la soupape d'écoulement (4) sont conçues pour déclencher automatiquement un processus de rinçage après une durée prédéfinie ou prédéfinissable en cas de non-utilisation de l'appareil sanitaire.
